# EUROPÄISCHE PATENTSCHRIFT

(11) **EP 1 369 602 B1**
(45) Veröffentlichungstag und Bekanntmachung des Hinweises auf die Patenterteilung: **27.07.2005**
(21) Anmeldenummer: 03002611.6
(22) Anmeldetag: 08.02.2003
(51) Int. Cl.: F16B 41/00, F16B 23/00, B60B 3/16, B25B 13/48, F16B 31/02

(54) **Räderdiebstahlsicherung mit einem Befestigungsteil und Schlüssel dafür**
Anti-theft Attachment of a Vehicle Wheel with Mounting Element and Key therefor
Attachement antivol d'une roue de véhicule avec élément de fixation et clé

(30) Priorität: 31.05.2002 DE 10224517
(43) Veröffentlichungstag der Anmeldung: 10.12.2003
(73) Patentinhaber: ADL SA, 77402 Lagny (FR)
(72) Erfinder: Lannerée, Daniel, 77200 Torcy (FR)
(74) Vertreter: Bauer, Wulf, Dr.

(56) Entgegenhaltungen:
- DE-C- 881 129
- FR-A- 2 837 884
- GB-A- 2 006 371

## Beschreibung

Die Erfindung bezieht sich auf eine Räderdiebstahlsicherung nach dem Oberbegriff des Anspruchs 1. Eine derartige Räderdiebstahlsicherung ist aus GB-A-2 006 371 bekannt.

Um den Diebstahl von Fahrzeugrädern, insbesondere von Fahrzeugrädern mit hochwertigen Felgen, zu behindern, werden Räderdiebstahlsicherungen, auch Felgenschlösser genannt, eingesetzt. Anstelle der normalen, unverschlüsselten Radschrauben bzw. Radmuttern, wie sie typischerweise vom Fahrzeughersteller eingebaut sind, werden spezielle Radschrauben bzw. Radmuttern mit einem Antriebsbereich eingesetzt, der nicht mit üblichen Schlüsseln zu erfassen ist und möglichst auch mit gängigen Hilfsmitteln, wie zum Beispiel Zangen, Rohrstücken, innenverzahnten Antriebsteilen usw. nicht zu lösen ist. Derart gesicherte Radschrauben bzw. Radmuttern werden zusammengefasst als Befestigungsteile bezeichnet. Dem Befestigungsteil ist ein Schlüssel zugeordnet, der in axialer Richtung aufgesteckt wird.

Mit dem Schlüssel wirken Antriebsbereich und Führungsbereich zusammen. Der Schlüssel hat entsprechende Bereiche, nämlich einen Antriebsteil und einen Führungsteil. Beide sind jeweils komplementär zu den jeweiligen Bereichen des Befestigungsteils ausgeführt. Der Antriebsteil bildet in Drehrichtung genügend Anschlagfläche aus, damit die erforderlichen Drehmomente übertragen werden können. Die Rücksprünge im Antriebsbereich sind nach einer Verschlüsselung versetzt angeordnet, so dass nur der tatsächlich passende Schlüssel, der die gleiche komplementäre Anordnung hat, mit dem Befestigungsteil zusammenwirken kann.

Der Führungsbereich dient dazu, den aufgesetzten Schlüssel axial gegenüber dem Befestigungsteil zu führen und zu halten. Ohne Führungsbereich würde dann, wenn ein ausreichend großes Drehmoment aufgebracht wird, z.B. das Nenndrehmoment, der Schlüssel sich schräg zur Achse des Befestigungsteils stellen, dadurch wird ein Verschrauben bzw. Lösen der Verschraubung des Befestigungsteils fast unmöglich. Der Führungsbereich muss somit so bemessen sein, dass er ausreichend fest ist, um quer zur Achse des Befestigungsteils angreifende Kippkräfte, wie sie bei den normalen Verschraubungsvorgängen bewusst auftreten, abfangen zu können.

Nun ist es bei dem Befestigungsteil nach dem eingangs genannten Stand der Technik und auch bei dem Befestigungsteil, wie es aus dem französischen Geschmacksmuster 955728 (Eintragungsnummer 421387) der Anmelderin bekannt ist, das Problem aufgetreten, dass die diebstahlgesicherten Befestigungsteile dadurch gelöst wurden, dass ein Passepartout eines Schlüssels erstellt wurde, indem die Vorsprünge des Schlüssels bis auf einen entfernt wurden und mit diesem Passepartout beliebig verschlüsselte Befestigungsteile abgeschraubt worden sind.

Die Erfindung hat es sich zur Aufgabe gemacht, die Sicherheit des Befestigungsteils der eingangs genannten Art weiter zu verbessern, dabei auch Gewicht zu sparen.

Gelöst wird diese Aufgabe durch die Merkmale des Anspruchs 1.

Die Erfindung schlägt somit vor, dass die Rücksprünge, die insbesondere als Schlüsselbohrungen ausgeführt sind, tiefer liegen als der sich nach aussen hin anschließende Randbereich. Insbesondere soll dieser Anstieg nach aussen und oben des Randbereichs bereits in einer Entfernung von der Achse vorliegen, in der sich auch die Rücksprünge befinden. So beginnt beispielsweise der Anstieg des Randbereichs in der Mitte der Schlüsselbohrungen. Der Anstieg setzt sich nach aussen, über den Bereich der Schlüsselbohrungen vorteilhafterweise fort. Der Anstieg erfolgt vorzugsweise monoton. Dieser erfindungsgemäße Randbereich hilft auch beim Ansetzen des Schlüssels, er erleichtert das Hineinrutschen der Vorsprünge (Stifte) in die Schlüsselbohrungen.

In einer vorzugsweisen Ausführung steigt der Randbereich in einem Winkel beta zwischen 5° und 75° bezogen auf eine Radialebene an. Im Speziellen liegt dieser Winkel beta im Bereich von 20° bis 60°. Diese Winkelbereiche haben sich als günstig erwiesen. Dadurch, dass der Randbereich schon innerhalb der Schlüsselbohrungen ansteigt, wird folgendes erreicht: Beim Schrauben, also Drehen um die Achse, schlagen die Stifte eines Schlüssels an die Innenwand der Schlüsselbohrungen an. Dieser Kontakt erfolgt je nach Form der Stifte mit einem gewissen Winkel. Bei runden Stiften kontaktiert die Mantellinie des Stifts, die auf dem Kreis um die Achse und durch die Stiftachsen liegt, die zugehörigen Schlüsselbohrungen in einer Axialebene, Drehmoment wird optimal übertragen. Die weiter abliegenden Mantellinien berühren aber in zunehmend größerem Winkel, tragen also weniger für die Übertragung des Drehmomentes bei. Bei diesen ist aber die Kontaktlänge in Richtung der Achse aufgrund des ansteigenden Randbereichs größer. Dies führt zu einem verstärkten Anheben eines Schlüssels, wenn ein Schlüssel mit weniger als der vorgesehenen Zahl von Stiften verwendet wird.

Der für das Befestigungsteil vorgesehene Schlüssel hat eine vorzugsweise eine Abschrägung, die vorzugsweise dem Anstieg des Randbereichs komplementär ist und die bei aufgesetztem Schlüssel mit dem Randbereich in Kontakt kommt. Diese Abschrägung verläuft vorzugsweise im selben Winkel und hat auch denselben Verlauf wie der Randbereich.

Der Randbereich ist vorzugsweise rotationssymmetrisch, dadurch vereinfacht sich die Herstellung des Befestigungsteils. Es ist aber auch möglich, in den Randbereich Spuren einzuarbeiten, die jeweils von einer Schlüsselbohrung ausgehen und spiralförmig nach aussen laufen, vorzugsweise in Lösedrehrichtung.

Bevorzugt ist der Führungsbereich zumindest an einer Stelle mit einer so klein bemessenen Querschnittsfläche ausgebildet, dass die Nenndrehmomente, wie sie für Verschrauben und Lösen der Schraubverbindung notwendig sind, nicht allein über den Führungskopf eingeleitet werden können, es vielmehr zu einem Abscheren bzw. Zerstören kommt. Hierfür wird insbesondere der Durchmesser und/oder die Wandstärke des Führungsteils reduziert. Dies kann über die gesamte Länge des Führungsbereiches oder nur über einen Teil dieser Gesamtlänge erfolgen. In jedem Fall wird Gewicht eingespart. Der Führungsbereich ist mechanisch nun nur so fest, dass er bei Verwendung eines passenden Schlüssels eine ausreichende Führung gegen Verkippen und Zentrierung der Drehbewegung bietet.

In bevorzugter Weiterbildung wird vorgeschlagen, dass im Führungsbereich ein Einschnitt vorgesehen ist, der sich zwischen dem Führungskopf und dem Antriebsbereich befindet. An der tiefsten Stelle dieses Einschnittes befindet sich die klein bemessene Querschnittsfläche. Es wird eine Sollbruchstelle geschaffen. Der Führungsbereich wird bewusst lokal an der Stelle des Einschnittes so weit geschwächt, dass er im Bereich des Einschnittes abschert, wenn einen Drehmoment zwischen dem Führungskopf und dem Antriebsbereich bzw. dem Verschraubungsbereich angreift.

In einer anderen bevorzugten Weiterbildung hat der Führungsbereich eine Ausnehmung und ist die Wandstärke des Führungsbereichs gering, insbesondere unter 3 mm ausgebildet. Diese Ausbildung eignet sich auch für Radmuttern. Die Ausnehmung kann so groß ausgeführt sein, dass ein Gewindebolzen durch den Führungsbereich hindurch ragen kann.

Es sind noch andere Möglichkeiten der Schwächung des Führungsbereichs denkbar, so können beispielsweise in radialer Richtung gebohrte Löcher einen Führungsbereich, der eine Ausnehmung aufweist schwächen.

Unter Nenndrehmoment wird dasjenige Drehmoment verstanden, das nach Vorschrift des Autoherstellers für das Anziehen der Schraubverbindungen vorgesehen ist. Typische Nenndrehmomente liegen beispielsweise bei 170 Nm.

Der Führungskopf ist vorzugsweise drehsymmetrisch, insbesondere ein Drehteil, dadurch kann er beim Aufsetzen des Schlüssels auf dem Befestigungsbereich die axiale Zuordnung sichern. Der Schlüssel kann somit relativ zum Befestigungsteil gedreht werden, bis er in die Rücksprünge formschlüssig eingreift. Demgemäss hat auch der Schlüssel einen dem Führungskopf entsprechenden Zentrierbereich, der Führungsteil genannt wird.

Es ist auch eine kinematische Umkehrung möglich. Anstelle der Rücksprünge des Antriebsbereiches können Vorsprünge vorgesehen werden, in diesem Fall hat dann der Schlüssel die entsprechenden, komplementären Ausnehmungen bzw. Rücksprünge. Unabhängig hiervon kann der Führungsbereich entweder in Axialrichtung positiv vom Antriebsbereich wegstehen und hat der Schlüssel als Führungsteil eine entsprechende Aufnahmebohrung für den Führungsbereich, oder ist der Führungsbereich als zentrisches Sackloch ausgebildet und es springt am Schlüssel positiv ein Vorsprung vor, der dann die klein bemessene Querschnittsfläche aufweist oder unwirksam gemacht wird.

In einer besonders bevorzugten Weiterbildung der Erfindung verläuft die Kontaktfläche, an die ein axial angesetzter Schlüssel zur Anlage kommt, in einem Winkel kleiner 90°, vorzugsweise kleiner 70° zur Achse. Die Kontaktfläche verläuft dann auf einem Kegel und ist so gestaltet, dass bei fehlendem Führungsbereich ein Verkippen des Schlüssels gegenüber dem Befestigungsteil möglich ist. Es ist also der Führungsbereich, der die axiale Zuordnung zwischen Schlüssel und Befestigungsteil sichert. Ist er nicht vorhanden, soll ein gleichachsiges, gemeinsames Drehen von Schlüssel und Befestigungsteil nicht möglich sein. Dies wird insbesondere durch eine schräge oder sogar bogenförmige, nach aussen konvex verlaufende Kontaktfläche erreicht.

In bevorzugter Weiterbildung befindet sich die Sollbruchstelle in unmittelbarer Nähe des Antriebsbereiches. Dadurch bleibt dann, wenn man ausschliesslich über den Führungskopf das Befestigungsteil freischrauben will und dieses erfindungsgemäß abschert, ein möglichst geringer Rest des Führungsbereiches am Befestigungsteil zurück.

Schliesslich ist in bevorzugter Weiterbildung das frontseitige Ende jedes Vorsprungs und/oder der Rücksprung in Umfangsrichtung mit einer schrägen Fläche versehen. Diese steigt grob gesehen im gleichen Richtungssinn wie der Schraubenlinienverlauf des Gewindes des Gewindebereichs an. Ein Lösen bewirkt ein Gleiten des Schlüssels auf diesen schrägen Flächen und zugleich ein axiales Abheben des Schlüssels, wenn der Schlüssel nicht für jeden Rücksprung des Befestigungsteils einen zugeordneten Vorsprung bzw. Mitnehmer hat. Hierdurch wird das Problem umgangen, dass das Befestigungsteil mit einem Schlüssel gelöst werden kann, der lediglich einen einzigen Vorsprung hat, bei dem also insbesondere bis auf einen Stift alle anderen Stifte entfernt sind. Ein derartiger Schlüssel würde auf alle Befestigüngsteile, unabhängig von der Verschlüsselung ihrer Rücksprünge, passen.

In bevorzugter Weiterbildung ist schliesslich eine Schutzkappe vorgesehen, die auf den Führungsbereich aufgesteckt ist. Sie ist in die klein bemessene Querschnittsfläche eingerastet. Diese Schutzkappe ist vorzugsweise so ausgebildet, dass bei aufgesteckter Schutzkappe das Befestigungsteil wie eine herkömmliche Radmutter bzw. Radschraube aussieht. Die Rücksprünge sind dann verdeckt.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
- Figur 1: eine Seitenansicht, teilweise geschnitten, eines Schlüssels einer Räderdiebstahlsicherung,
- Figur 2: eine Seitenansicht, teilweise geschnitten, eines Befestigungsteils, das zum Schlüssel nach Figur 1 passt und in achsgleicher Ausrichtung zu diesem dargestellt ist, dieses Befestigungsteil weist keinen nach außen ansteigenden Randbereich auf und ist dem- nach nicht erfindungsgemäß,
- Figur 3: eine Darstellung wie Figur 1 eines Schlüssels, jedoch nunmehr in einer geänderten Ausführung,
- Figur 4: eine Darstellung wie Figur 2 eines Befestigungsteils, jedoch in einer geänderten, zum Schlüssel nach Figur 3 passenden Ausbildung, auch dieses Befestigungsteil ist nicht erfindungsgemäß,
- Figur 5: eine Seitenansicht, teilweise geschnitten, eines Befestigungsteils, das zum Schlüssel gemäß Fig. 1 passt und dessen Führungsbereich durch eine Ausnehmung geschwächt ist,
- Figur 6: eine Darstellung ähnlich Fig. 4 mit einer Anlaufschräge in Lösedrehrichtung, dieses Befestigungsteil ist nicht erfindungsgemäß,
- Figur 7: ein Schnittbild entlang der Schnittlinie VII - VII in Fig. 6,
- Figur 8: eine Darstellung eines Schlüssels ähnlich Fig. 3 mit elliptisch abgerundeten freien Enden der Stifte 32 und
- Figur 9: eine Darstellung eines Befestigungsteils ähnlich Fig. 4, jedoch nunmehr mit nach aussen konisch ansteigender Schräge.

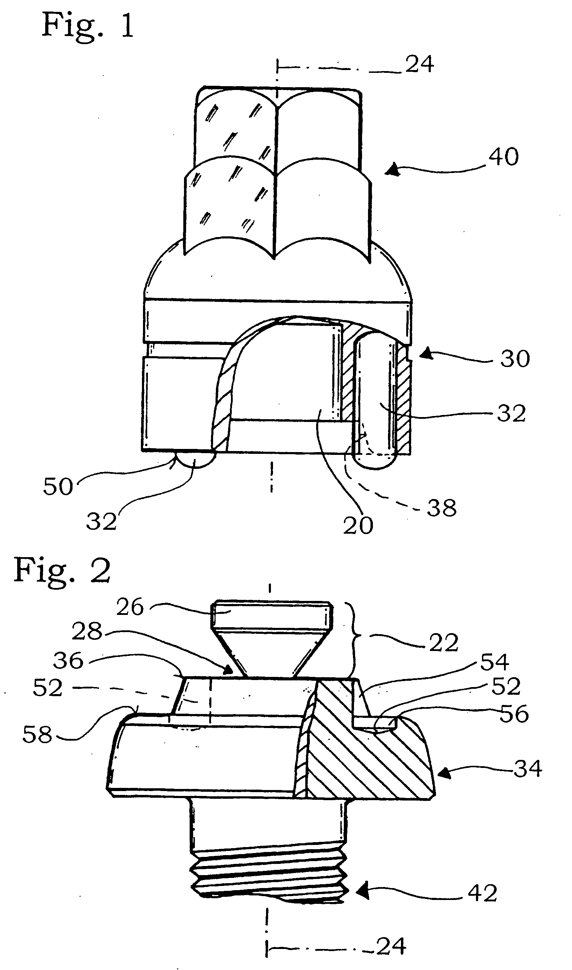

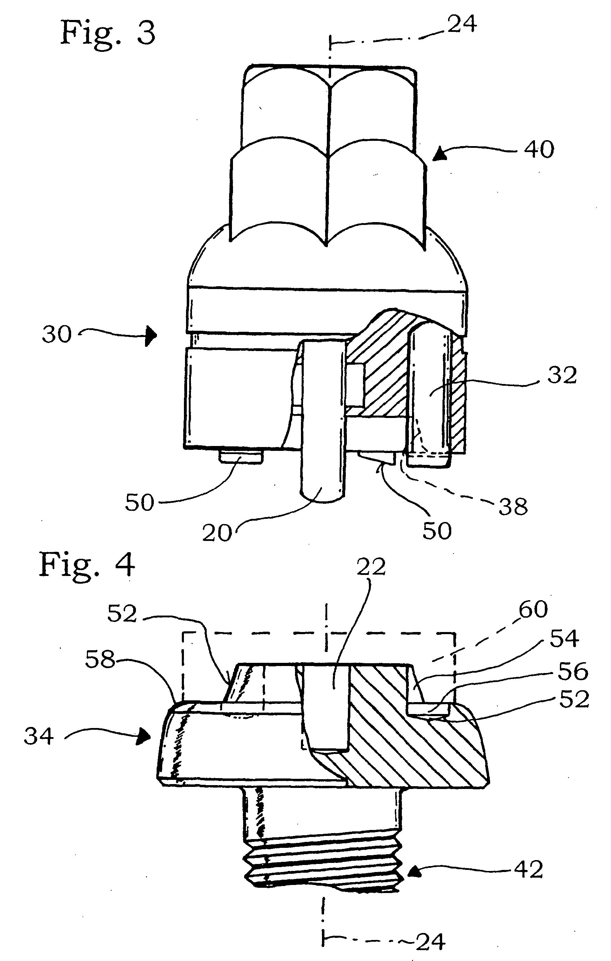

Zunächst wird das Ausführungsbeispiel nach den Figuren 1 und 2 besprochen. Der Schlüssel nach Figur 1 hat einen Führungsteil 20, der mit einem Führungsbereich 22 des Befestigungsteils nach Figur 2 kooperiert und der konzentrisch zu einer Achse 24 verläuft. Er hat weiterhin einen Antriebsteil 30, der nach einer verschlüsselten Anordnung verteilte Stifte 32 hat, die die Vorsprünge bilden. Sie verlaufen axial, es sind insgesamt vier Vorsprünge vorgesehen, von denen in Figur 1 zwei und in Figur 3 drei zu sehen sind. Der Antriebsteil 30 des Schlüssels ist komplementär zu einem Antriebsbereich 34 des Befestigungsteils nach Figur 2, das hier als Radschraube ausgeführt ist. Schliesslich hat der Schlüssel ein Mehrkantteil 40, das zwei gestuft angeordnete und in Richtung der Achse 24 orientierte Sechskante aufweist, hierzu wird auf DE 296 17 043 U verwiesen.

Im Ausführungsbeispiel wird das Führungsteil 20 durch eine Sackbohrung im glockenförmigen Gehäuse des Schlüssels realisiert, diese Bohrung ist konzentrisch zur Achse 24 und nach unten hin offen. Als unten wird entsprechend der Darstellung in den Figuren der Teil des Schlüssels verstanden, an dem die Stiftbohrungen 32 vorstehen. Der Führungsteil 20 ist in seiner axialen Tiefe und seiner Innenabmessung dem Führungsbereich 22 angepasst. Der Führungsbereich 22 ist konzentrisch zur Achse 24 und erstreckt sich in Gegenrichtung zu einem Gewindebereich 42, der auch konzentrisch zur Achse 24 ist. Er ist in der gezeigten Ausführung als Aussengewinde ausgeführt. Er ist einem entsprechenden Gegengewinde (der nicht dargestellten) Nabe angepasst.

Der Führungsbereich endet in einem Führungskopf 26, der hier die Form eines flachen Zylinders hat. Er ist der Sackbohrung, die den Führungsteil 20 bildet, angepasst. Werden Schlüssel und Befestigungsteil in der Anordnung nach Figur 1 und 2 axial zusammengeschoben, findet der Erstkontakt zwischen dem Führungskopf 26 und dem Führungsteil 20 statt. Dadurch ist eine axiale Zuordnung von Schlüssel und Befestigungsteil gegeben, beide Teile können noch gegeneinander um die Achse 24 verdreht werden. Es ist auch eine geringe Verkippung innerhalb der Herstellungstoleranz möglich.

Unterhalb des Führungskopfes 26 verjüngt sich der Führungsbereich 22 deutlich, er besteht in diesem Teilstück aus einem Kegelstumpf. Der Durchmesser verringert sich zu einer klein bemessenen Querschnittsfläche 28 hin, auch Sollbruchstelle genannt, und beträgt dort etwas weniger als 40% des Durchmessers des Führungskopfes 26. Diese Querschnittsfläche 28 befindet sich unmittelbar angrenzend an den Antriebsbereich 34.

Die Sollbruchstelle 28 ist so bemessen, dass ein allein am Führungskopf 26 angreifendes Nenndrehmoment (bei eingespanntem Antriebsbereich 34 bzw. eingespanntem Gewindebereich 42) zu einem Abscheren des Führungsbereiches 22 führt. Als Nenndrehmoment wird das Drehmoment verstanden, das der Automobilhersteller für das konkrete Befestigungsteil vorschreibt. Typische Nenndrehmomente liegen bei 170 Nm.

Die Querschnittsfläche 28 kann beliebig ausgeführt sein. Weiterhin ist die dargestellte Kegelform nur ein Beispiel. Es ist auch möglich, dass der gesamte Führungsbereich 22 die Querschnittsfläche 28 aufweist, also z.B. zylindrisch ist. Bevorzugt ist aber eine konkrete Stelle, an der ein Sollbruch stattfinden kann. Diese Stelle sollte möglichst nahe am Antriebsbereich 34 liegen, damit beim Abscheren möglichst wenig vom Führungsbereich 22 verbleibt und sich somit möglichst wenig Angriffsmöglichkeiten für ein Lösewerkzeug bieten.

Das Befestigungsteil nach Figur 2 kann man als eine normale Schraube ansehen, der Gewindebereich 42 bildet den Schraubenschaft, der Antriebsbereich 34 bildet den Kopf und der Führungsbereich 22 ist axial auf den Kopf aufgesetzt. Der Antriebsbereich 34 kommt erst mit dem Antriebsteil 30 in Kontakt, wenn Führungsteil 20 und Führungsbereich 22 bereits im Eingriff sind. Der Antriebsbereich 34 hat eine Kontaktfläche 36, die schräg zur Achse 24 verläuft. Sie liegt auf einem Kegel, dessen Spitze sich oberhalb des Befestigungsteils, also oberhalb des Führungsbereichs 22, befindet und der einen Öffnungswinkel von etwa 30° hat. Dieser Öffnungswinkel kann bevorzugt im Bereich 20° bis 70° liegen. Der Winkel zur Achse 24 ist dann die Hälfte dieses Öffnungswinkels.

Der Schlüssel hat eine entsprechende Gegenkontaktfläche 38 gleichen Winkels, sie ist in Figur 1 gestrichelt angedeutet.

Die Stifte 32 sind separate Teile, die in das ansonsten einstückig hergestellte Basisteil des Schlüssels eingebracht sind. In das Basisteil werden parallel zur Achse 24 vier Bohrungen für die Stifte eingebracht, in diesen werden dann die Stifte 32 gehalten. Die Stifte 32 springen geringfügig gegenüber der Unterfläche des Basisteils vor. An ihrem freien Ende sind die Stifte kuppenförmig ausgebildet. Dadurch stellen sie verringert quer zur Drehrichtung stehende Anschläge dar, vielmehr bilden sie in beiden Drehrichtungen eine schräge Fläche.

Entscheidend ist die schräge Fläche 50 in Drehrichtung des Lösens der Verschraubung. Sie ist insbesondere aus Figur 3 gut ersichtlich. Sie steigt wie die Schraubenlinie des Gewindebereichs 42 an, bewirkt also ein axiales Anheben im Sinne eines Entfernens vom Befestigungsteil, wenn sie mit einem entsprechenden Gegenanschlag am Befestigungsteil zusammenwirkt. Dieser Gegenanschlag wird gebildet durch den Rand von Schlüsselbohrungen 52, die komplementär angeordnet zu den Stiften im Antriebsbereich 34 vorgesehen sind und die Rücksprünge bilden. Diese Schlüsselbohrungen sind im Randbereich ausgebildet, dadurch nehmen sie die Stifte 32 nur teilweise auf. Sie durchschneiden die Kontaktfläche 36, dadurch kommt es zu einer etwa dreieckförmigen seitlichen Anlagefläche 54, die in beiden Drehrichtungen vorhanden ist. Die Schlüsselbohrungen gehen zudem ein Stück in das Material des Führungsbereiches 22 hinein und bilden dort ringförmige Abstützflächen 56. An diesen schlagen die freien Enden der Stifte 32 an, wenn ein Drehmoment vom Schlüssel auf das Befestigungsteil übertragen werden soll. Aufgrund der schrägen Fläche 50 jedes Stiftes 32 kommt es zu dem beschriebenen axialen Anheben. Dieses wird durch die schräg verlaufende Kontaktfläche 36 und die zugehörige Gegenkontaktfläche 38 begünstigt.

Die Anordnung ist so gewählt, dass ein Nenndrehmoment nicht mit einer Anzahl von Stiften im Schlüssel aufgebracht werden kann, die kleiner ist als die vorgesehene Anzahl von Stifte 32. Dadurch wird vermieden, dass man im Schlüssel alle Stifte 32 bis auf einen entfernt und damit ein Passepartout für alle Befestigungsteile hat. Die Anlageflächen 54 zusammen mit den Abstützflächen 56 bilden Berührungsflächen und sind so bemessen, dass alle Stifte 32 für die Übertragung des Nenndrehmomentes herangezogen werden müssen. Sind nicht alle Stifte 32 vorhanden, vermögen die Flächen 54, 56 nicht genügend Drehmoment aufzunehmen, vielmehr kommt es insbesondere aufgrund der schrägen Flächen 50 und auch der Zylinderform der Stifte 32 zum Abheben.

Grundsätzlich müssen die schrägen Flächen 50 nur in Drehrichtung beim Lösen ausgebildet sein, wie dies im Ausführungsbeispiel nach Figur 3 der Fall ist. Im Ausführungsbeispiel nach Figur 1 und 2 sind sie auch in der Antriebsrichtung, also Verschraubrichtung, vorgesehen. Die kuppenförmige Ausbildung gemäß Fig. 1 erleichtert jedoch die Montage, eine Fehlpositionierung ist wegen der Drehsymmetrie nicht möglich.

Der Antriebsbereich 34 hat eine Außenkontur 58, die bogenförmig, nach aussen konvex verläuft. Dadurch wird das Ansetzen eines speziellen Werkzeuges in diesem Bereich erschwert.

Der Rundungsradius am freien Ende der Stifte 32 liegt zwischen 0,1 und 2 mm. Die Stifte haben typischerweise einen Durchmesser von 4 mm. Sie sind vorzugsweise gehärtet, insbesondere im Bereich ihres freien Endes. Die Stifte stehen etwa 1,5 mm gegenüber der Abschlussfläche des Basisteils frei vor.

Im zweiten Ausführungsbeispiel nach den Figuren 3 und 4 sind folgende Unterschiede zum ersten Ausführungsbeispiel vorhanden, es werden nur die Unterschiede beschrieben, gleichbleibende Funktionen werden nicht erneut erwähnt:

Das Führungsteil 20 des Schlüssels ist nun nicht mehr eine Zylinderbohrung, sondern ein zentrischer Stift, der vom unteren Ende des Basisteils weiter frei vorragt als die Stifte 32. Dementsprechend ist der Führungsbereich 22 als Sackbohrung im Befestigungsteil ausgebildet. Insoweit liegt eine kinematische Umkehrung vor. Das als Stift ausgeführte Führungsteil 20 ist im Basisteil des Schlüssels nicht vollflächig gelagert, vielmehr hat die Aufnahmebohrung eine Aussparung. Dadurch ist es möglich, das stiftförmige Führungsteil 20 durch eine ausreichend große Kraft, die quer zur Achse 24 angreift, aus seiner Position zu drücken. In einer Alternative kann auch eine Sollbruchstelle im stiftförmigen Führungsteil 20 vorgesehen sein. Entscheidend ist, dass die Führungseigenschaften verloren gehen, wenn eine ausreichende Querkraft wirkt. Diese ausreichende Querkraft wird bei Einsatz eines normalen Schlüssels nicht erreicht, wohl aber bei Verwendung eines Schlüssels, der nicht alle Stifte 32 aufweist.

Schliesslich sind die freien Enden der Stifte 32 nur in Löserichtung mit der schrägen Fläche 50 versehen, also nicht kuppenförmig ausgeführt. Hierauf wurde bereits hingewiesen.

In Figur 4 ist noch eine Kappe 60 gestrichelt angedeutet, die den Antriebsbereich 34 übergreift und vorzugsweise so gestaltet ist, dass das gesamte Befestigungsteil wie eine handelsübliche Radmutter aussieht. Diese Kappe ist am Führungsteil 20 verankert, hierzu bietet sich insbesondere die Querschnittsfläche 28 an.

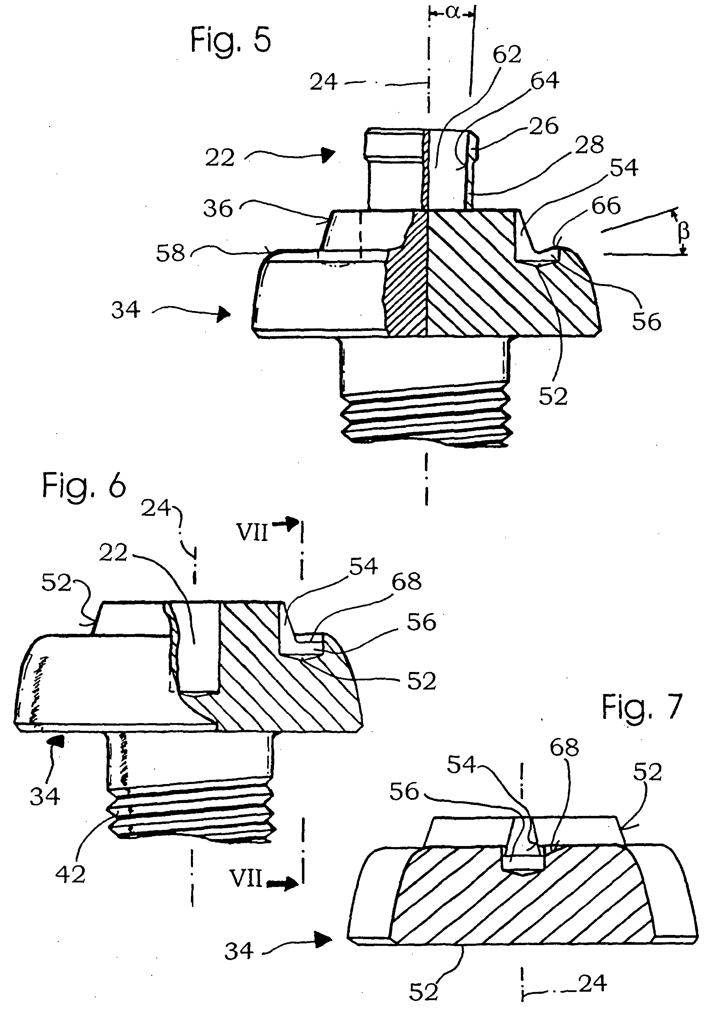

In der Ausführung nach Figur 5 ist der Führungsbereich 22 durch eine Ausnehmung 62 geschwächt. Sie ist konzentrisch zur Achse 24 und erstreckt sich axial über die gesamte Länge des Führungsbereichs 22. Sie kann auch etwas kürzer als die axiale Länge des Führungsbereichs 22 ausgeführt sein. Durch sie hat der Führungsbereich 22 eine Innenwand 64. Diese verläuft unter einem Winkel alpha zur Achse 24. Der Winkel alpha liegt zwischen 0° und 20°, vorzugsweise zwischen 0 und 10°. Im gezeigten Ausführungsbeispiel beträgt er etwa 1,5°. Die Wandstärke zwischen der Innenfläche 64 und der Außenfläche ist so gewählt, dass der Führungsbereich 22 mechanisch seine Führungsaufgaben erfüllen kann, aber ein Drehmoment, das lediglich am Führungsbereich 22 angreift, eher zur Zerstörung dieses Führungsbereichs 22 führt, als zu einem Lösen bei einem Nenndrehmoment. Die Wanddicke liegt im Bereich 0,3 bis 1,5 mm. Wie die Figur zeigt, variiert die Wanddicke über die axiale Länge des Führungskopfes 26. Bevorzugt ist die Wanddicke dort am geringsten, wo der Führungsbereich 22 in den Antriebsbereich 34 übergeht. An dieser Stelle kann auch ein kleiner Einschnitt vorgesehen sein, beispielsweise eine Nut eingedreht sein, so dass ein Effekt wie bei der Figur 2 erzielt wird, also der Führungskopf 26 vorzugsweise im Übergang zum Antriebbereich 34 abschert.

Weiterhin ist in Figur 5 der Antriebsbereich 34 geändert. Ausgehend von einer Schlüsselbohrung 52 und in Blickrichtung radial nach aussen verläuft ein Randbereich 66 mit einer positiven Steigung und unter einem Winkel beta zu einer Radialebene, der in Figur 5 eingezeichnet ist. Anders ausgedrückt schliesst sich radial nach aussen gesehen an die Anlageflächen 54 eine ansteigende Fläche, insbesondere eine Kegelfläche an, die im Bereich der Schlüsselbohrung 52 beginnt und nach aussen hin ansteigt. Diese ansteigende Fläche verhindert zusätzlich, dass bei Einsatz eines Universalschlüssels mit beispielsweise nur einem Stift 32 der Befestigungsteil abgeschraubt werden kann. Sie bewirkt eine anhebende Kraft in axialer Richtung.

In der Ausführung nach den Figuren 6 und 7 schließt sich an jede Schlüsselbohrung 52 in Umfangsrichtung eine Rampenfläche 68 an. Sie befindet sich nur in Richtung eines lösenden Drehmoments, in Gegenrichtung hierzu ist keine Rampenfläche vorgesehen. Die Rampenfläche steigt in einem Winkel zwischen 5° und 30° an. Die Anlagefläche 54 ist dadurch in Lösedrehrichtung kleiner als in Richtung eines anziehenden, verschraubenden Drehmomentes.

Die Rampenfläche 68 kann auch bei den anderen Ausführungsbeispielen eingesetzt werden, wie überhaupt die unterschiedlichen Ausführungsbeispiele beliebig miteinander hinsichtlich ihrer einzelnen Merkmale kombiniert werden können.

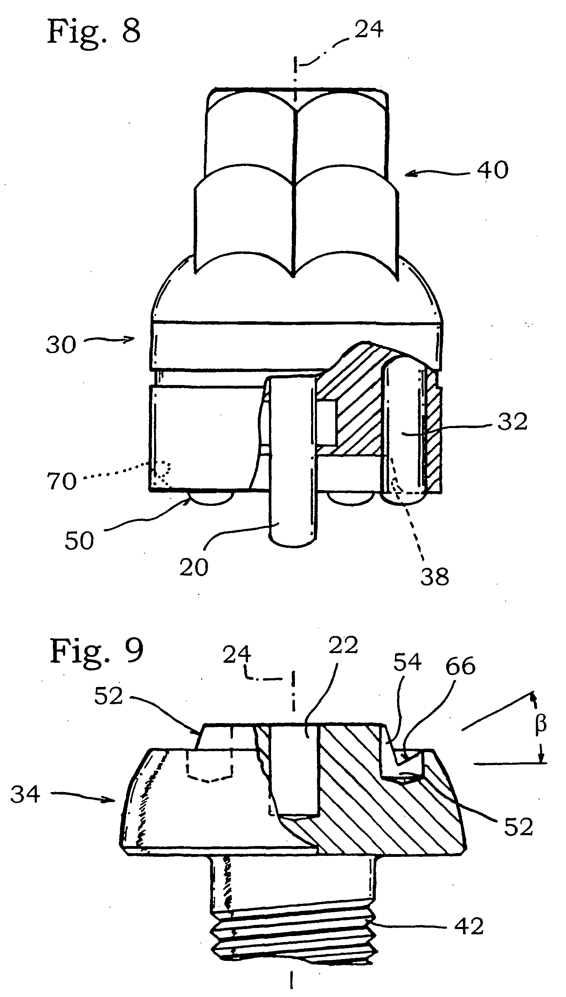

Der Schlüssel in seiner Ausbildung gemäß Figur 8 entspricht in wesentlichen dem Schlüssel gemäß der Figur 3, jedoch sind nunmehr die unteren, freien Enden der Stifte 32 oval gerundet, die längere Achse der Ellipse verläuft quer zur Achse 24. Durch diese Ausbildung wird die Berührungsfläche mit dem Antriebsbereich verringert.

Der zum Schlüssel gemäß Figur 8 zugehörige Befestigungsteil gemäß Figur 9 ist ähnlich ausgebildet wie derjenige nach Fig. 3. Er hat eine nach oben ansteigende schräge Fläche, auch Randbereich 66 genannt, die auf einem Kegelmantel liegt. Im Unterschied zu der Ausbildung gemäß Figur 5 ist der Verlauf nunmehr im wesentlichen gradlinig und ist der Steigungswinkel beta größer gewählt. Zu diesem Randbereich 66 ist noch folgendes auszuführen: Wie die Figuren 2, 5 und 9 belegen, findet der Übergang zwischen den schräg verlaufenden Kanten der Anlagefläche 54 und dem Randbereich 66 etwa auf der Achse der Schlüsselbohrungen 52 statt. Anders ausgedrückt ist im Schnittbild gesehen dort die tiefste Stelle der Kontur. Mit der Innenwand der Schlüsselbohrung 52 kommen die Stifte 32 daher insbesondere in ihrem gekrümmten Randbereich in Kontakt und weniger mit ihren in Drehrichtung vorn liegenden Teilbereichen. Die bei einem Drehen wirksam werdende Kontaktfläche, die auf einem Zylindermantel um die Achse 24 liegt, der durch die Achsen der Stifte 32 hindurch läuft, ist daher gering. Genau auf diesem Zylindermantel erfolgt der Kontakt rechtwinkelig zum antreibenden Drehmoment, während in zunehmendem Abstand von der Achse der Schlüsselbohrung 52 der Kontakt zunehmend in größerem Winkel erfolgt.

Der Schlüssel kann an der Stelle seiner unteren Ecke (in der Darstellung der Fig. 8, die eine Profildarstellung ist, gesehen) abgeschrägt verlaufen, also eine Abschrägung 70 aufweisen, die vorzugsweise der Rampenfläche 68 angepasst ist. Auch sie verläuft rotationssymmetrisch.

## Patentansprüche

1. Räderdiebstahlsicherung mit einem Befestigungsteil für eine Befestigung eines Fahrzeugrades, wobei das Befestigungsteil folgende drei Bereiche aufweist:
- einen Gewindebereich (42), der a) konzentrisch zu einer Achse (24) des Befestigungsteils ist, der b) als Aussen- oder Innengewinde ausgeführt ist und der c) einem entsprechenden Gegengewinde der Nabe angepasst ist,
- einen Antriebsbereich (34), der nach einer verschlüsselten Anordnung verteilte Rücksprünge, insbesondere Schlüsselbohrungen (52), hat, an denen ein antreibendes Drehmoment angreift, und der eine Kontaktfläche (36) aufweist, die sich in Nähe der Rücksprünge (52) befindet, und
- einen Führungsbereich, der sich in Richtung der Achse (24) erstreckt, **dadurch gekennzeichnet, dass** der Antriebsbereich (34) einen Randbereich (66) aufweist, der ausgehend von den Rücksprüngen (52) nach außen hin ansteigt und der sich außerhalb der Kontaktfläche (36) befindet.

2. Räderdiebstahlsicherung nach Anspruch 1, **dadurch gekennzeichnet, dass** der Randbereich (66) in einem Winkel beta zwischen 5° und 75°, insbesondere 20° und 60°, bezogen auf eine Radialebene, ansteigt.

3. Räderdiebstahlsicherung nach Anspruch 1, **dadurch gekennzeichnet, dass** der Randbereich (66) stetig nach aussen hin ansteigt, insbesondere geradlinig oder gekrümmt verläuft.

4. Räderdiebstahlsicherung nach Anspruch 1, **dadurch gekennzeichnet, dass** der Führungsbereich einen Einschnitt, der sich zwischen dem Führungskopf (26) und dem Antriebsbereich (34) befindet und/oder eine Ausnehmung (62) aufweist.

5. Räderdiebstahlsicherung nach Anspruch 2, **dadurch gekennzeichnet, dass** der Führungsbereich zumindest auf einem Teilstück seiner axialen Länge eine so klein bemessene Querschnittsfläche (28) aufweist, dass ein am Führungskopf (26) angreifendes Drehmoment, das mindestens den Wert des normalen Nenndrehmomentes beim Verschrauben des Befestigungsteils in der Radnabe hat, ein Zerstören des Führungsbereichs (22) bewirkt.

6. Räderdiebstahlsicherung nach Anspruch 1, **dadurch gekennzeichnet, dass** eine Rampenfläche (68) vorgesehen ist, die mit jeweils einer Schlüsselbohrung (52) verbunden ist und jeweils nur in Drehrichtung eines lösenden Drehmoments vorgesehen ist.

7. Räderdiebstahlsicherung nach Anspruch 1, **dadurch gekennzeichnet, dass** die Kontaktfläche (36), an die ein axial angesetzter Schlüssel zur Anlage kommt, in einem Winkel kleiner 90°, vorzugsweise kleiner 70°, zur Achse (24) verläuft.

8. Räderdiebstahlsicherung nach Anspruch 5, **dadurch gekennzeichnet, dass** eine Außenkontur (58) vorgesehen ist, die bogenförmig, nach aussen konvex verläuft.

9. Räderdiebstahlsicherung nach Anspruch 1, **dadurch gekennzeichnet, dass** die Rücksprünge (52) in Lösedrehrichtung eine schräge Fläche (50) aufweisen, die ein axiales Anheben eines aufgesetzten Schlüssels bewirkt, wenn ein Drehmoment in der Drehrichtung angreift, die einem Lösen des Gewindebereichs (42) entspricht.

10. Räderdiebstahlsicherung nach Anspruch 1 mit einem Schlüssel, **dadurch gekennzeichnet, dass** der Schlüssel Vorsprünge (32) aufweist, die den Rücksprüngen (52) angepasst sind und die vorzugsweise Stifte sind und dass die freien Enden der Vorsprünge (32) einerseits nur geringfügig gegenüber dem restlichen Antriebsbereich (34) vorstehen und andererseits eine schräge Fläche (50) aufweisen, die ein axiales Anheben eines aufgesetzten Schlüssels bewirkt, wenn ein Drehmoment in der Drehrichtung angreift, die einem Lösen des Gewindebereichs (42) entspricht, insbesondere abgerundet ausgebildet sind.

## Claims

1. A wheel anti-theft device having a fastening means for fastening a vehicle wheel, with the fastening means comprising the following three regions:
- a threaded region (42) that a) is concentric with an axis (24) of the fastening means, that b) is implemented as an external or an internal thread and that c) is mated with a corresponding complementary mating thread of the hub,
- a drive region (34) that has setbacks arranged according to an encoded pattern, more specifically wrench bores (52), to which a driving torque is applied and that comprises a contact surface (36) located in proximity to the setbacks (52), and
- a guide region extending in the direction of the axis (24),
**characterized in that** the drive region (34) comprises a border region (66) that commences at the setbacks (52) and slopes upward and outward and that is located outside of the contact surface (36).

2. The wheel anti-theft device as set forth in claim 1, **characterized in that** the border region (66) slopes upward at an angle .beta. of between 5° and 75°, more specifically of between 20° and 60° with respect to a radial plane.

3. The wheel anti-theft device as set forth in claim 1, **characterized in that** the border region (66) slopes continuously upward and outward, more specifically in a straight or a curved orientation.

4. The wheel anti-theft device as set forth in claim 1, **characterized in that** the guide region comprises an indentation that is located between the guide head (26) and the drive region (34) and/or a recess (62).

5. The wheel anti-theft device as set forth in claim 2, **characterized in that** the guide region comprises, at least on a portion of its axial length, so small a cross sectional area (28) that a torque applied to the guide head (26) and having at least the value of the normal nominal torque generated while screwing the fastening means in the wheel hub will destroy the guide region (22).

6. The wheel anti-theft device as set forth in claim 1, **characterized in that** there is provided a ramp surface (68) that is connected to a respective one of the wrench bores (52) and is only provided in the direction of rotation of an unscrewing torque.

7. The wheel anti-theft device as set forth in claim 1, **characterized in that** the contact surface (36) against which an axially positioned wrench is brought into contact is oriented at an angle of less than 90°, preferably of less than 70°, relative to the axis (24).

8. The wheel anti-theft device as set forth in claim 5, **characterized in that** there is provided an outer contour (58) that is convexly curved outward.

9. The wheel anti-theft device as set forth in claim 1, **characterized in that** the setbacks (52) comprise an inclined surface (50) in the unscrewing direction, said inclined surface causing a wrench placed thereon to be lifted axially when a torque is applied in the direction of rotation for unscrewing the threaded region (42).

10. The wheel anti-theft device as set forth in claim 1 having a wrench, **characterized in that** the wrench comprises projections (32) that are mated with the setbacks (52) and preferably are pins and that, on the one side, the free ends of the projections (32) only slightly protrude from the remainder of the drive region (34) and, on the other side, comprise an inclined surface (50) for axially lifting a wrench placed thereon when a torque is applied in the direction of rotation for unscrewing the threaded region (42), more specifically are configured to be rounded.

## Revendications

1. Antivol de roue avec une pièce de fixation pour une fixation d'une roue de véhicule, ladite pièce de fixation présentant les trois zones suivantes :
- une zone filetée (42) qui a) est concentrique à un axe (24) de la pièce de fixation, b) est réalisée comme filet extérieur ou filet intérieur et c) est adaptée à un contre-filet correspondant du moyeu,
- une zone d'entraînement (34) qui présente des retraits répartis selon une disposition codée, en particulier des trous codés (52) sur lesquels est appliqué un couple moteur, et qui présente une surface de contact (36) qui est située à proximité des retraits (52), et
- une zone de guidage qui s'étend dans la direction de l'axe (24),
**caractérisé par le fait que** la zone d'entraînement (34) présente une zone marginale (66) qui, à partir des retraits (52), monte vers l'extérieur et qui est située à l'extérieur de la surface de contact (36).

2. Antivol de roue selon la revendication 1, **caractérisé par le fait que** la zone marginale (66) monte à un angle bêta compris entre 5° et 75°, en particulier entre 20° et 60°, par rapport à un plan radial.

3. Antivol de roue selon la revendication 1, **caractérisé par le fait que** la zone marginale (66) monte de façon continue vers l'extérieur, que, en particulier, elle s'étend de façon rectiligne ou courbée.

4. Antivol de roue selon la revendication 1, **caractérisé par le fait que** la zone de guidage présente une incision qui est située entre la tête de guidage (26) et la zone d'entraînement (34), et/ou un creux (62).

5. Antivol de roue selon la revendication 2, **caractérisé par le fait que** la zone de guidage présente au moins sur un tronçon de sa longueur axiale, une aire de la section (28) dimensionnée d'une manière tellement petite qu'un couple appliqué sur la tête de guidage (26), qui présente au moins la valeur du couple nominal normal lors du vissage de la pièce de fixation dans le moyeu, provoque une destruction de la zone de guidage (22).

6. Antivol de roue selon la revendication 1, **caractérisé par le fait que** l'on prévoit une surface en rampe (68) qui est liée respectivement à un trou codé (52) et qui n'est prévue respectivement que dans la direction de rotation d'un couple de desserrage.

7. Antivol de roue selon la revendication 1, **caractérisé par le fait que** la surface de contact (36) sur laquelle une clé mise de manière axiale vient en appui s'étend à un angle inférieur à 90°, de préférence inférieur à 70°, par rapport à l'axe (24).

8. Antivol de roue selon la revendication 5, **caractérisé par le fait que** l'on prévoit un contour extérieur (58) qui s'étend en arc, de manière convexe vers l'extérieur.

9. Antivol de roue selon la revendication 1, **caractérisé par le fait que** les retraits (52) présente dans la direction de rotation de desserrage une surface oblique (50) qui provoque un soulèvement axial d'une clé mise, lorsqu'un couple agit dans la direction de rotation qui correspond à un desserrage de la zone filetée (42).

10. Antivol de roue selon la revendication 1 avec une clé, **caractérisé par le fait que** la clé présente des projections (32) qui sont adaptées aux retraits (52) et qui, de préférence, sont des broches, et que les extrémités libres des projections (32), d'un côté, ne sont que légèrement en saillie par rapport à la zone restante d'entraînement (34) et, de l'autre côté, présentent une surface oblique (50) qui provoque un soulèvement axial d'une clé mise, lorsqu'un couple agit dans la direction de rotation qui correspond à un desserrage de la zone filetée (42), en particulier les extrémités libres des projections étant arrondies.
